(19) Europäisches Patentamt / European Patent Office / Office européen des brevets

(11) **EP 2 955 822 A1**

(12) **EUROPEAN PATENT APPLICATION**

(43) Date of publication:
**16.12.2015 Bulletin 2015/51**

(51) Int Cl.:
*H02K 21/24* (2006.01)          *H02K 1/14* (2006.01)

(21) Application number: **15171470.6**

(22) Date of filing: **10.06.2015**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA**<br><br>(30) Priority: **11.06.2014 KR 20140071072**<br>**20.11.2014 KR 20140162607** | (71) Applicant: **Samsung Electronics Co., Ltd Gyeonggi-do 443-742 (KR)**<br><br>(72) Inventor: **YOO, Byung-jin Chungcheongbuk-do (KR)**<br><br>(74) Representative: **Birchenough, Lewis HGF Limited Saviour House 9 St Saviourgate York YO1 8NQ (GB)** |

(54) **BRUSHLESS MOTOR**

(57)    A brushless motor in which a stator and a rotor are arranged relative to one another in a direction of a rotational axis is provided. The rotor may include a plurality of annularly arranged permanent magnets which are N-poles and S-poles that alternate with each other about the rotational axis of the rotor. The stator may include first teeth annularly arranged and facing the plurality of permanent magnets in the direction of the rotational axis, and a plurality of coils corresponding to the first teeth. The relationship between the number $Z_2$ of magnetic dipoles of the plurality of permanent magnets, the number $Z_1$ of first teeth and the number P of magnetic dipoles of the stator is $Z_2 = Z_1 \pm P$.

FIG. 1

EP 2 955 822 A1

## Description

## BACKGROUND

1. Field

This disclosure relates generally to a brushless motor having a stator.

2. Description of the Related Art

Electric motors convert electrical energy into mechanical energy using current applied to a conductor in a magnetic field, to produce a force. Various types of electric motors are applied throughout the industry. In particular, brushless motors that dispense with the need for a brush and a commutator by providing a permanent magnet on a rotor, and including a stator core and a winding coil in a stator, are widely used.

There is a demand for brushless motors applicable to driving systems of structures in which components are arranged in a direction of a rotational axis, for example, lenses of an imaging apparatus or a lens barrel on which the lenses are mounted. It is desirable to provide a motor design enabling the driving systems to be small in size and having a high output.

The above information is presented as background information only to assist with an understanding of the present disclosure. No determination has been made, and no assertion is made, as to whether any of the above might be applicable as prior art with regard to the present disclosure.

## SUMMARY

It is an aim of certain embodiments of the present invention to address, solve, mitigate or obviate, at least partly, at least one of the problems and/or disadvantages associated with the related art, for example at least one of the problems and/or disadvantages mentioned herein. Certain embodiments of the present invention aim to provide at least one advantage over the related art, for example at least one of the advantages mentioned herein.

Illustrative exemplary embodiments disclosed herein include a brushless motor capable of driving structures arranged in the direction of a rotational axis. The brushless motor may be capable of generating a high torque at a low-speed rotation.

In accordance with an exemplary first aspect of the present disclosure, there is provided a brushless motor comprising: a rotor comprising a plurality of annularly arranged permanent magnets which are N-poles and S-poles that alternate with each other about a rotational axis of the rotor; and a stator comprising first teeth annularly arranged and each extending in a direction of the rotational axis, and a plurality of coils corresponding to the first teeth.

In accordance with an exemplary second aspect of the present disclosure, there is provided a brushless motor according to the first aspect, wherein the first teeth are arranged facing the plurality of permanent magnets in a direction of the rotational axis, and wherein a relationship between a number $Z_2$ of magnetic dipoles of the plurality of permanent magnets, a number $Z_1$ of first teeth, and a number P of magnetic dipoles of the stator is $Z_2 = Z_1 \pm P$.

In accordance with an exemplary third aspect of the present disclosure, there is provided a brushless motor according to the first aspect, wherein the stator further comprises a plurality of connection members respectively extending from the first teeth; and third teeth respectively arranged on the plurality of connection members such that the third teeth face the plurality of permanent magnets in the direction of the rotational axis.

In accordance with an exemplary fourth aspect of the present disclosure, there is provided a brushless motor according to any of the first to third aspects, wherein the brushless motor comprises a vernier structure. In certain exemplary embodiments, the first teeth and the permanent magnets may not respectively correspond to each other.

According to another exemplary aspect of the present disclosure, a brushless motor includes: a rotor including a plurality of annularly arranged permanent magnets which are N-poles and S-poles that alternate with each other about a rotational axis of the rotor; and a stator including first teeth annularly arranged and facing the plurality of permanent magnets in a direction of the rotational axis, and a plurality of coils corresponding to the first teeth. A relationship between a number $Z_2$ of magnetic dipoles of the plurality of permanent magnets, a number $Z_1$ of first teeth, and a number P of magnetic dipoles of the stator may be expressed as $Z_2 = Z_1 \pm P$.

In certain exemplary embodiments, the rotor may further include a rotor core that has a hollow interior and supports the plurality of permanent magnets.

In certain exemplary embodiments, the stator may further include a first stator core that has a hollow interior and supports the first teeth.

In certain exemplary embodiments, the plurality of coils may be wound around the first teeth.

In certain exemplary embodiments, the first teeth may be arranged separate from each other at equal intervals in a circumferential path about the rotational axis, and a plurality of first slots may be formed between the first teeth. The plurality of coils may be wound around the first stator core such that the plurality of coils correspond to the plurality of first slots.

In certain exemplary embodiments, the brushless motor may further include second teeth which are respectively connected to portions of the first teeth and arranged to face the plurality of permanent magnets in the direction of the rotational axis. A width of each of the second teeth in a radial direction of the stator may be greater than a width of each of the first teeth in the radial direction of the stator.

In certain exemplary embodiments, the brushless motor may further include a second stator core that has a hollow shape, interposed between the first teeth and the second teeth, and connects the second teeth to each other.

In certain exemplary embodiments, a width of each of the second teeth in the radial direction of the stator may be equal to or greater than a sum of a width of each of the first teeth in the radial direction of the stator and a width of each of the plurality of coils wound around the first teeth.

According to another exemplary aspect of the present disclosure, a brushless motor includes a rotor including a plurality of permanent magnets which are N-poles and S-poles that alternate with each other annularly about a rotational axis of the rotor; and a stator, wherein the stator includes first teeth annularly arranged and each extending in a direction of the rotational axis; a plurality of coils corresponding to the first teeth; a plurality of connection members respectively extending from the first teeth in the circumferential direction; and third teeth respectively arranged on the plurality of connection members such that the third teeth face the plurality of permanent magnets in the direction of the rotational axis.

In certain exemplary embodiments, when the number of magnetic dipoles of the plurality of permanent magnets is $P_r$, the number of dipoles of the third teeth is $N_s$, and the number of dipoles of the first teeth is $P_s$, the brushless motor may be expressed as $P_r = N_s - P_s$.

In certain exemplary embodiments, the brushless motor may further include a rotor core that has a hollow shape and supports the plurality of permanent magnets.

In certain exemplary embodiments, the plurality of coils may be wound around the first teeth.

In certain exemplary embodiments, the brushless motor may further include a first stator core that has a hollow shape and supports the first teeth.

In certain exemplary embodiments, the first teeth may be arranged separate from each other at equal intervals in a circumferential path about the rotational axis, and a plurality of first slots may be formed between the first teeth.

In certain exemplary embodiments, the third teeth may be arranged separate from each other at equal intervals in the circumferential path, and a plurality of second slots may be formed between the third teeth.

In certain exemplary embodiments, a width of each of the third teeth in a radial direction of the stator may be greater than a width of each of the first teeth in the radial direction of the stator.

In certain exemplary embodiments, the brushless motor may further include a second stator core that has a hollow shape and connects the plurality of connection members to each other.

In certain exemplary embodiments, a width of each of the third teeth in the radial direction of the stator may be equal to or greater than a sum of a width of each of the first teeth in the radial direction of the stator and a width of each of the plurality of coils wound around the first teeth.

Other aspects, advantages, and salient features of the invention will become apparent to those skilled in the art from the following detailed description, which, taken in conjunction with the annexed drawings, disclose exemplary embodiments of the invention.

**BRIEF DESCRIPTION OF THE DRAWINGS**

The above and/or other aspects, and features and advantages of certain exemplary embodiments and aspects of the present disclosure will become more apparent and more readily appreciated from the following detailed description of exemplary embodiments, taken in conjunction with the accompanying drawings, in which:

FIG. 1 is an exploded perspective view of a brushless motor according to an exemplary embodiment of the present disclosure;

FIG. 2 is a perspective view of an example of a rotor included in the brushless motor of FIG. 1;

FIG. 3 is a perspective view of an example of a stator included in the brushless motor of FIG. 1;

FIG. 4A is a perspective view of a brushless motor in which first teeth are arranged on a stator core, according to an exemplary embodiment of the present disclosure;

FIG. 4B is a side view of the brushless motor of FIG. 4A;

FIG. 4C is a perspective view of a brushless motor according to another exemplary embodiment of the present disclosure, around which coils are wound;

FIG. 5 is a plan view of a rotor and a stator of a brushless motor according to an exemplary embodiment of the present disclosure;

FIG. 6A is an exploded perspective view of a brushless motor obtained by modifying the stator of the brushless motor of FIG. 1, according to an exemplary embodiment of the present disclosure;

FIG. 6B is an assembled perspective view of the brushless motor of FIG. 6A;

FIG. 6C is a partial perspective view of the brushless motor of FIG. 6A;

FIG. 7A is a perspective view of a stator of a brushless motor in which first teeth and third teeth are arranged, according to another exemplary embodiment of the present disclosure;

FIG. 7B is a perspective view of the brushless motor of FIG. 7B;

FIG. 7C is a plan view of a rotor and the stator of the brushless motor of FIG. 7B;

FIG. 8A is an exploded perspective view of a brushless motor obtained by modifying the stator of the brushless motor of FIG. 1, according to another exemplary embodiment of the present disclosure;

FIG. 8B is an assembled perspective view of the brushless motor of FIG. 8A;

FIG. 8C is a partial perspective view of the brushless motor of FIG. 8A;

FIG. 9A is a perspective view of a stator of a brushless motor in which first teeth and third teeth are arranged, according to another exemplary embodiment of the present disclosure;

FIG. 9B is a perspective view of the brushless motor of FIG. 9A; and

FIG. 9C is a plan view of a rotor and the stator of the brushless motor of FIG. 9B.

## DETAILED DESCRIPTION

The following description of exemplary embodiments of the present disclosure, with reference to the accompanying drawings, is provided to assist in a comprehensive understanding of the present invention, as defined by the claims. The description includes various specific details to assist in that understanding but these are to be regarded as merely exemplary. Accordingly, those of ordinary skill in the art will recognize that various changes and modifications of the embodiments described herein can be made without departing from the scope of the invention.

The terms and words used in the following description and claims are not limited to the bibliographical meanings, but, are merely used to enable a clear and consistent understanding of the invention. Accordingly, it should be apparent to those skilled in the art that the following description of exemplary embodiments of the present disclosure is provided for illustration purpose only and not for the purpose of limiting the invention, as defined by the appended claims.

The same or similar reference numerals may be used in the drawings to denote the same or similar elements.

Detailed descriptions of well-known functions, operations, processes, structures, components, elements and constructions may be omitted for clarity and conciseness, and to avoid obscuring the subject matter of the present disclosure.

Throughout the description and claims of this specification, the words "comprise", "include", "has", and "contain" and variations of the words, for example "comprising" and "comprises", means "including but not limited to", and is not intended to (and does not) exclude other features, elements, components, integers, steps, processes, operations, characteristics, properties and/or groups thereof.

Throughout the description and claims of this specification, the singular forms "a," "an," and "the" include plural referents unless the context dictates otherwise. Thus, for example, reference to "an object" includes reference to one or more of such objects.

Throughout the description and claims of this specification, by the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Throughout the description and claims of this specification, the expression "and/or" includes any and all combinations of the associated listed words. For example, the expression "A and/or B" may include A, may include B, or may include both A and B.

Throughout the description and claims of this specification, language in the general form of "X for Y" (where Y is some action, process, activity, operation or step and X is some means for carrying out that action, process, activity, operation or step) encompasses means X adapted, configured or arranged specifically, but not exclusively, to do Y.

Features, elements, components, integers, steps, processes, operations, functions, characteristics, properties and/or groups thereof described in conjunction with a particular aspect, claim, embodiment or example of the present disclosure are to be understood to be applicable to any other aspect, claim, embodiment or example described herein unless incompatible therewith.

Herein, references to aspects or embodiments of the present disclosure may also refer to exemplary embodiments of the present invention.

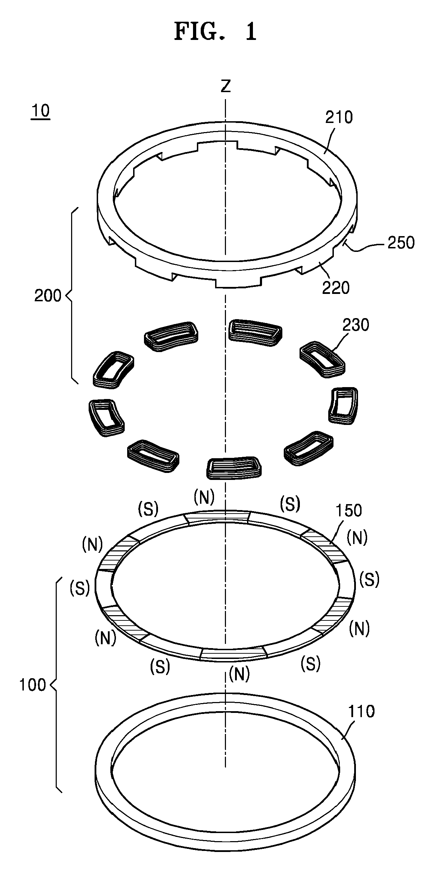

FIG. 1 is an exploded perspective view of a brushless motor, 10, according to an illustrative embodiment. The brushless motor 10 includes a stator 200 and a rotor 100 that rotates with respect to the stator 200. The stator 200 and rotor 100 may each be ring-shaped. The stator 200 includes a first, flat ring-shaped stator core 210 having a hollow interior, and first teeth 220 each extending in a direction of a rotational axis Z and arranged in a circumferential path (i.e., annularly) of the first stator core 210. Coils 230 may be wound around the first teeth 220, respectively. The rotor 100 includes a rotor core 110 and permanent magnets 150.

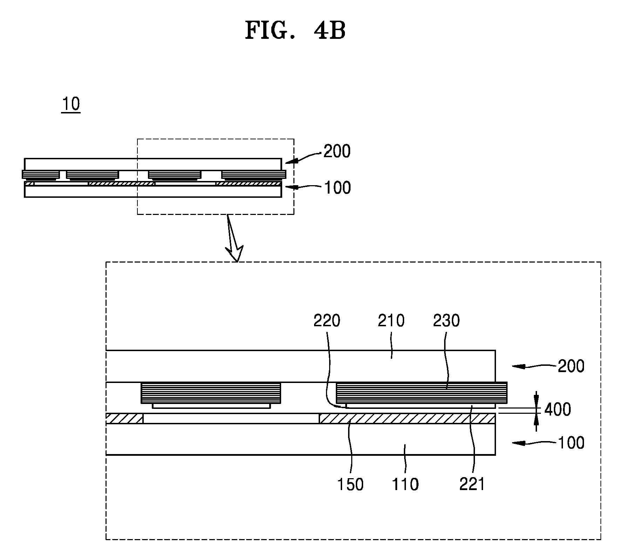

Referring momentarily to FIG. 4B, when the motor 10 is assembled, the rotor 100 may be spaced apart from the lowest surface of the first teeth 220. That is, the rotor 100 may be spaced from one end 221 of each of the first teeth 220 included in the stator 200 by an air gap 400.

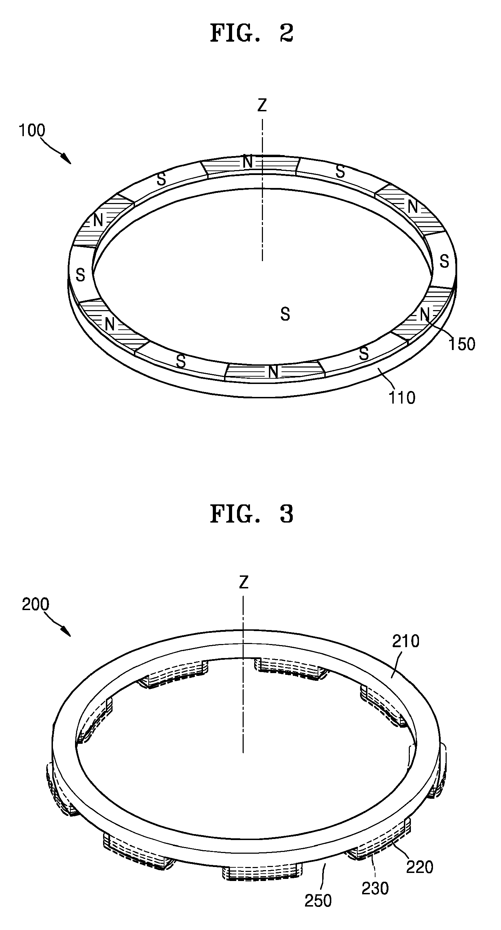

FIG. 2 is a perspective view of an example of the rotor 100. Referring collectively to FIGS. 1 and 2, the rotor 100 includes the rotor core 110 and permanent magnets 150 of annularly alternating north (N) and south (S) polarities. The rotor core 110 may have a hollow ring structure. The rotor core 110 may be a stack of a plurality of thin plates formed of, e.g a ferromagnetic material or a magnetically permeable material, e.g. ring-shaped iron plates, in the direction of the rotational axis Z.

The permanent magnets 150 may be arranged at equal intervals on one surface (the upper surface in the figures) of the rotor core 110, which faces the first teeth 220 of the stator 200. The permanent magnets 150 are N-poles and S-poles alternating with each other in the circumferential direction of the rotor core 110. The permanent magnets 150 may be mounted on the rotor core 110 by any of various methods. Suitable methods include but are not limited to those forming a surface permanent magnet (SPM) or an interior permanent magnet (IPM). In the case of SPMs, the permanent magnets 150 are attached to an outer circumferential surface of the rotor core 110. In the case of IPMs, the permanent magnets 150 are buried in the rotor core 110. Compared with SPMs, in the case of IPMs, the permanent magnets 150 are not likely to be detached from the rotor core 110, and a reluctant torque may be actively used. It is noted that IPMs are known to those skilled in the art, such as those typically used in motors and the like of compressors for use in, for example, air conditioners or refrigerators.

FIG. 3 is a perspective view of an example of the stator 200. In this example, the stator 200 includes a first stator core 210, first teeth 220, and coils 230. The first stator core 210 may be a stack of ring-shaped thin metal plates in the direction of the rotational axis Z. The first teeth 220 may be annularly arranged at equal intervals in the circumferential direction of the first stator core 210, on one surface of the first stator core 210 that faces the permanent magnets 150 of the rotor 100 in the direction of the rotational axis Z. A plurality of first slots 250 each having a concave or partially-rectangular shape (with three sides of a rectangle) are formed, by virtue of the teeth 220, between the first teeth 220 in order to accommodate the coils 230 that are respectively wound around the first teeth 220. The first slots 250 may be arranged at equal intervals in the circumferential direction of the first stator core 210. In other words, the first teeth 220 and the first slots 250 alternate with each other annularly (i.e., in the circumferential direction) of the first stator core 210.

The coils 230 may be formed by respectively winding wires around the first teeth 220 with insulators (not shown) interposed between the wires and the first teeth 220. A relationship between the number of permanent magnets 150 of the rotor 100 and the number of first teeth 220 around which the coils 230 are wound will be described later.

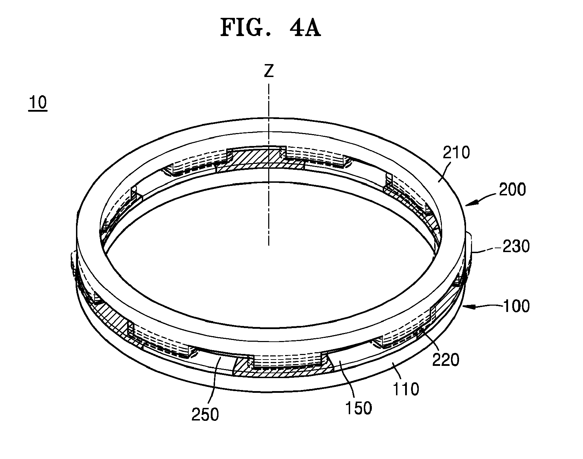

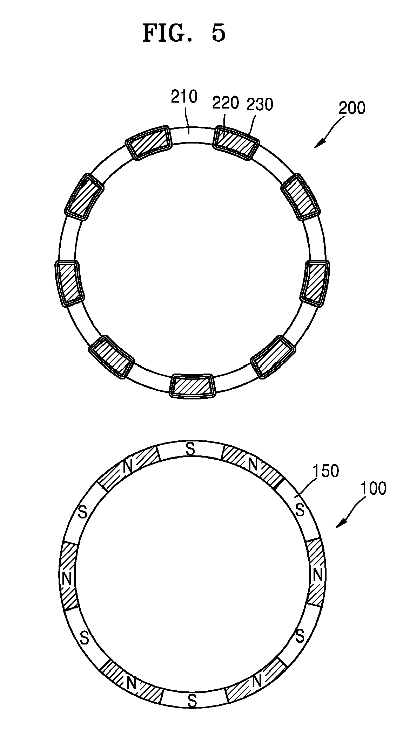

FIG. 4A is a perspective view of the brushless motor 10 of FIG. 1 in an assembled state, and FIG. 4B is a partial cross-section of the assembled brushless motor 10 of FIG. 4A. FIG. 5 shows a bottom plan view of the stator 200 in an assembled state with coils 230 wound around the first teeth 220, and a top plan view of the rotor 100 with magnets 150 assembled over the rotor core 110.

Referring to FIGS. 4A, 4B and 5, the rotor 100 and the stator 200 may be arranged such that the permanent magnets 150 of the rotor 100 respectively face ends 221 of the first teeth 220 disposed on the first stator core 210 in the direction of the rotation axis Z. That is, upper surfaces of the magnets 150 oppose lower surfaces of the teeth. With this arrangement, the air gap 400 is formed between the permanent magnets 150 of the rotor 100 and the respective ends 221 of the first teeth 220, and thus the rotor 100 and the stator 200 are apart by a predetermined small distance from each other in the direction of the rotational axis Z.

However, in alternative embodiments, a relative arrangement between the rotor 100 and the stator 200 may differ. For instance, the rotor 100 may alternatively be disposed above the stator 200 at a certain distance in the direction of the rotational axis Z. The location where the coils 230 are wound is not limited to the first teeth 220 in the stator 200, as seen in the further examples described below.

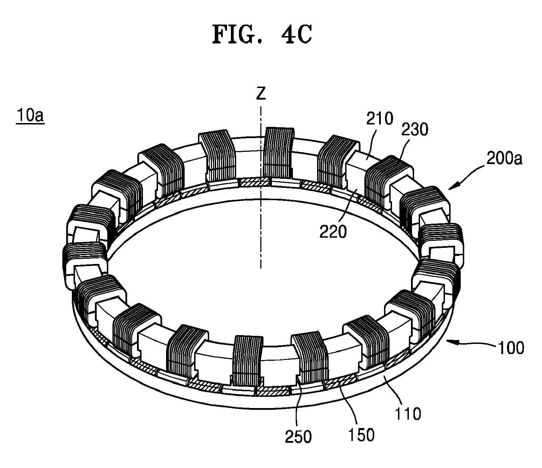

FIG. 4C is a perspective view of another embodiment of a brushless motor, designated as 10a. In this example, a plurality of coils 230 are wound in an orthogonal direction as compared to that of motor 10. That is, the coils 230 of motor 10a are respectively wound around the slots 250 and the upper portion of the stator core 210 so as to respectively reside partially within the plurality of first slots 250. Accordingly, in FIG. 4C the coils 230 are located between the first teeth 220 and arranged annularly at equal intervals. When the coils 230 are respectively wound around the first stator core 210 as in the motor 10a, the coils 230 may be more easily assembled into the stator 200, as compared to being wound around the first teeth 220.

As the rotor 100 and the stator 200 or 200a are together arranged in the direction of the rotational axis Z as described above, in a driving system formed along a rotational axis, for example, a driving system for driving lenses and the like of an imaging apparatus, the lenses and the like may be arranged within the rotor 100 and the stator 200 (or 200a), which are hollow. Thus, the driving system may be more easily constructed and may have a compact size.

In the brushless motor 10 or 10a, when a current-applying circuit applies a current to the coils 230 respectively wound around the first teeth 220, the first teeth 220 / coils 230 have N-pole and S-pole polarities alternating with each other. Thus, an attraction and a repulsive force generated by the magnetic forces of the first teeth 220 / coils 230 and the permanent magnets 150 of the rotor are exerted in a tangential direction of the rotor 100, and the rotor thereby 100 rotates.

In the brushless motors 10, 10a as described above, the number of first stator teeth 220 differs from the number of permanent magnets 150. If, however, the first stator teeth 220 and the permanent magnets 150 are arranged in a one-to-one correspondence, a driving stage may be set for each correspondence between the first teeth 220 and the magnets 150 that respectively correspond to each other.

On the other hand, in a driving apparatus requiring a high torque during a low-speed rotation, a brushless motor 10 or 10a may be used in which the number of first stator teeth 220 differs from the number of permanent magnets 150. In the particular example illustrated in FIGS. 1 to 4B and 5, twelve magnets 150 and nine teeth 220 / coils 230 are employed within the motor 10.

In the example of FIGS. 1 to 4B and FIG. 5, the brushless motor 10 employs a "vernier structure," and thus the first stator teeth 220and the permanent magnets 150 may not respectively correspond to each other. (It is also noted, the number of stator teeth 220 in the motor 10a of FIG. 4C is shown equal to the number of magnetic dipoles of the rotor 100, but they may alternatively differ, so that the vernier structure may also be applied to the motor 10a configuration of FIG. 4C with coils 230 wrapped around the slots 250 and upper portions of the stator core 210. The below description refers to the motor 10 but is equally applicable to the motor 10a.) The brushless motor 10, to which a vernier structure has been applied, may be expressed as Equation (1):

$$Z_2 = Z_1 \pm P \qquad (1)$$

$Z_2$: the number of magnetic dipoles of the rotor 100,
$Z_1$: the number of first teeth 220 of the rotor 200,
P: the number of magnetic dipoles of the stator 200.

In Equation (1), $Z_2$ indicates the number of magnetic dipoles formed by the permanent magnets 150 of the rotor 100, and P indicates the number of magnetic dipoles formed by the coils 230 wound around the stator 200. For example, since the rotor 100 of the brushless motor 10 of FIG. 5 includes 12 permanent magnets 150, the number of magnetic dipoles of the rotor 100 is 6. The stator 200 includes 9 first teeth 220 arranged in the circumferential direction of the first stator core 210. In a three-phase brushless motor 10, the nine first teeth 220 are arranged at equal intervals, and the coils 230 are respectively wound around the nine first teeth 220. Thus, the number of magnetic dipoles of the stator 200 is 3. In other words, when a three-phase brushless motor 10 is used, the number of first teeth 220 arranged on the first stator core 210 may be a multiple of 3, and the number of permanent magnets 150 arranged on the rotor 100 may be determined to correspond to the number of first teeth 220 according to Equation (1). Although the brushless motor 10 is illustrated as a three-phase brushless motor in embodiments described herein, in other embodiments the number of first teeth 220 and the number of permanent magnets 150 may vary depending on the types of the brushless motor 10 as long as the numbers satisfy Equation (1). Also, multi-phase motors other than three-phase are contemplated.

The speed of the brushless motor 10, to which a vernier structure has been applied, may be less than that of a general brushless motor by a ratio of $P/Z_2$, and thus torque density may increase. Accordingly, the brushless motor 10 of FIGS. 1 - 5 may be driven at a half the speed of a general brushless motor, and may be able to generate twice the torque than that generated by a general brushless motor. Therefore, the brushless motor 10 of FIGS. 1 - 5 may be applied to driving apparatuses requiring a high torque when being used at a low speed, for example, driving apparatuses for driving lenses of an imaging apparatus or a lens barrel on which the lenses are mounted.

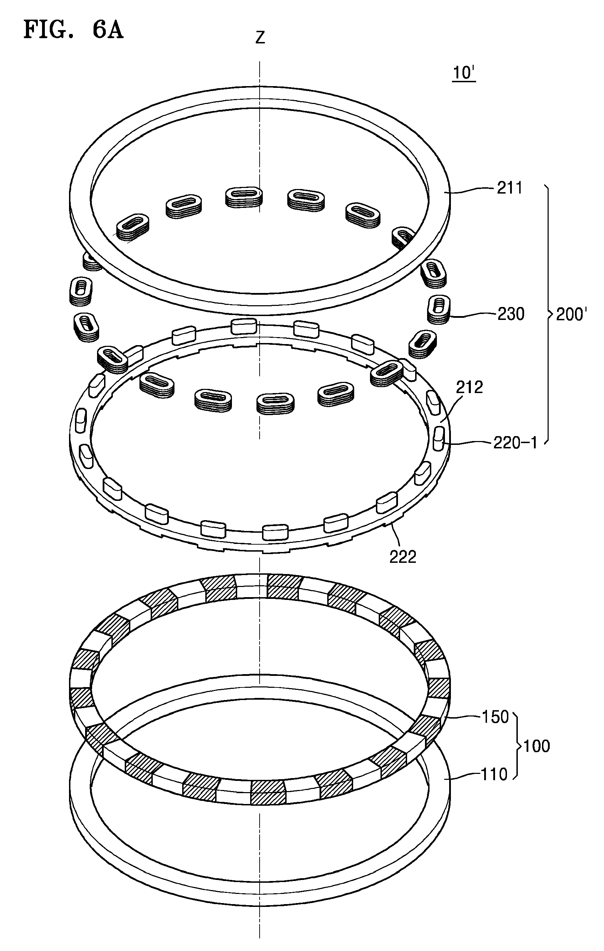

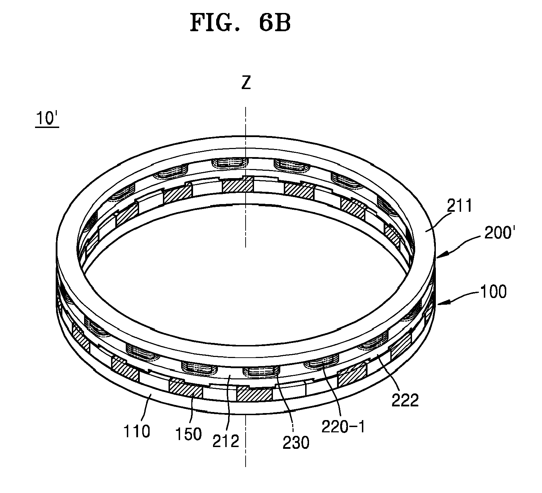

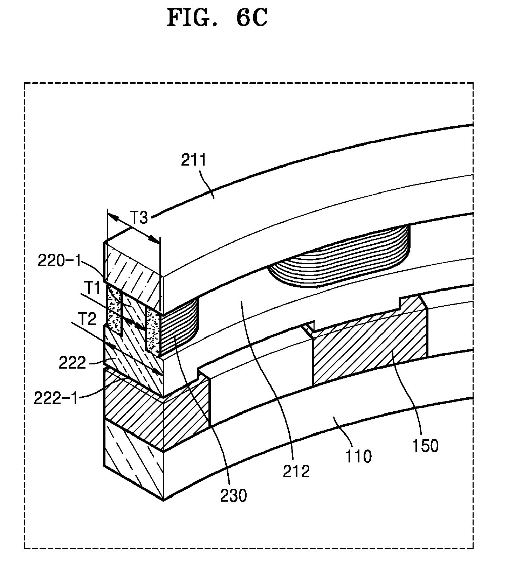

FIG. 6A is an exploded perspective view of a brushless motor, 10', which may be constructed by modifying the stator 200 of the brushless motor 10 of FIG. 1, according to an embodiment of the present disclosure. FIG. 6B is an assembled perspective view of the brushless motor of FIG. 6A, and FIG. 6C is a partial perspective view of the brushless motor of FIG. 6A.

In a hollow structure, such as a structure for mounting lenses of an imaging apparatus or a lens barrel on which the lenses are mounted, a space used to construct the brushless motor 10 may be directly related to the size of the lens barrel of the imaging apparatus, and thus the brushless motor 10 may need to be disposed within a restricted radius of the rotational axis Z. However, the restriction on the space used to construct the brushless motor 10 may reduce the area of a surface on which a magnetic force is exerted between the stator 200 and the rotor 100, and also reduce the number of windings of each of the coils 230, and thus a torque of the brushless motor 10 may decrease.

Referring to FIGS. 6A and 6B, the brushless motor 10' includes a stator 200' and a rotor 100 that rotates with respect to the stator 200'. The stator 200' includes a first stator core 211 having a hollow shape, first teeth 220 each extending in the direction of the rotational axis Z and arranged annularly, i.e., in a circumferential direction of the first stator core 211, a second stator core 212 having a hollow shape and a top surface from which the first teeth 220-1 protrude. One end of each of the first teeth 220-1 may be connected to the core 212.Second teeth 222 may each extend in the direction of the rotational axis Z and may be arranged in a circumferential direction of the second stator core 212. Coils 230 may be respectively wound around the first teeth 220-1. Although it is illustrated that the first teeth 220-1 and the second teeth 222 are connected via the second stator core 212, in other designs, the first teeth 220-1 and the second teeth 222 may be directly connected to each other, rather than via the second stator core 212.

Referring to FIG. 6C, the coils 230 may be wound around the first teeth 220-1, and ends 222-1 of the second teeth 222 may respectively face the permanent magnets 150 of the rotor 100, and thus magnetic flux interlinkage may occur. In this case, a width T1 of each of the first teeth 220-1 in a radial direction of the stator 200' may be less than a width T2 of each of the second teeth 222 in the radial direction of the stator 200'. Accordingly, even when the coils 230 are respectively wound around the first teeth 220-1, a sum T3 of the width T1 of each of the first teeth 220-1 and a width of each of the coils 230 in the radial direction of the stator 200' may be less than or equal to the width T2 of each of the second teeth 222 in the radial direction of the stator 200'.

Since the width T1 of each of the first teeth 220-1 in the radial direction of the stator 200' is set to be less than the width T2 of each of the second teeth 222 in the radial direction of the stator 200', the brushless motor 10' may be disposed within a restricted radius of the rotational axis Z. Moreover, the number of windings of each of the coils 230 may be increased by reducing the width T1 of each of the first teeth 220-1 in the radial direction, and accordingly a torque of the brushless motor 10' may be increased by increasing magnetic flux interlinkage through the first teeth 220-1 and the second teeth 222.

The second teeth 222 are arranged to face the permanent magnets 150 of the rotor 100, and thus magnetic flux interlinkage may occur. In this case, the width T2 of each of the second teeth 222 in the radial direction of the stator 200' may be set to be greater than the width T1 of each of the first teeth 220-1 in the radial direction thereof regardless of the number of windings of each of the coils 230. Consequently, the area of the end 222-1 of each of the second teeth 222 may be set to be equal to that of the end 221 of each of the first teeth 220 of FIG. 4B in the earlier described embodiment of motor 10. Therefore, the brushless motor 10' of FIGS. 6A-6C may be disposed within a restricted radius of the rotational axis Z, compared with the brushless motor 10 of FIG. 1, and still the area of a surface on which a magnetic force is exerted between the stator 200' and the rotor 100 and the number of windings of each of the coils 230 may be maintained or increased. As a result, a torque of the brushless motor 10' as compared to that of brushless motor 10 may be maintained or increased.

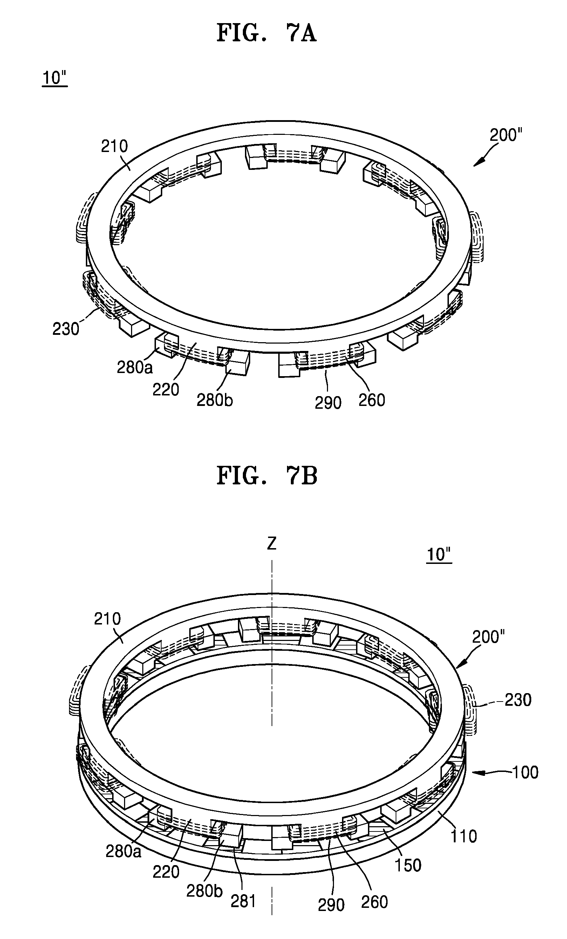

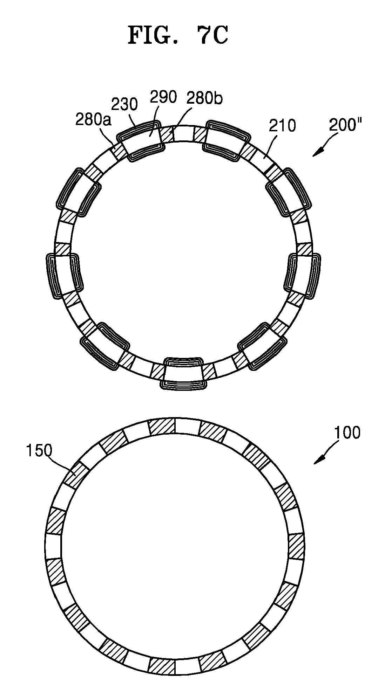

FIGS. 7A and 7B are perspective views of a stator 200" and a brushless motor 10", respectively, according to another embodiment of the present disclosure. FIG. 7C is a plan view of a rotor 100 and the stator 200" of the brushless motor 10" of FIG. 7B. (Note that the number of magnets 150 in the rotor 100 in the example of FIG. 7C differs from that of the rotor 100 of FIG. 1 but the general configuration may be the same.)

Referring to FIGS. 7A and 7B, the first teeth 220 and third teeth 280 (i.e., teeth 280a, 280b) connected to the first teeth 220 are arranged on the first stator core 210. (Note that any tooth 280a or 280b is an example of a tooth 280.) A connection member 260 extending in the circumferential direction of the first stator core 210 is disposed on one end 221 of each of the first teeth 220 arranged on the first stator core 210, and third teeth 280a and 280b are respectively disposed on both ends of the connection member 260.

Each of the third teeth 280 extends from the connection member 260 in the direction of the rotational axis Z, and a second slot 290 is formed between adjacent third teeth 280a and 280b. Ends 281 of the third teeth 280 may respectively face the permanent magnets 150 of the rotor 100 in the direction of the rotational axis Z.

A plurality of coils 230 may be formed by respectively winding wires around the first teeth 220 with insulators (not shown) interposed between the wires and the first teeth 220.

Referring to FIG. 7C, the brushless motor 10" may employ a vernier structure, like in the embodiment of FIG. 1, and thus the third teeth 280 of the stator 200" and the permanent magnets 150 of the rotor 100 may not respectively correspond to each other. However, the brushless motor 10" employing the vernier structure in which the third teeth 280 are arranged on the first teeth 220 may be expressed as Equation (2):

$$P_r = N_s - P_s \qquad (2)$$

$P_r$: the number of magnetic dipoles of the rotor 100,
$N_s$: the number of dipoles of the third teeth 280 of the stator 200",
$P_s$: the number of dipoles of the first teeth 220 of the stator 200".

In Equation (2), $P_r$ indicates the number of magnetic dipoles formed by the permanent magnets 150 of the rotor 100, $P_s$ indicates the number of dipoles formed by the coils 230 wound around the first teeth 220 of the stator 200", and $N_s$ indicates the number of dipoles formed by the third teeth 280 of the stator 200" by interactions with the permanent magnets 150 of the rotor 100. For example, since the rotor 100 of the brushless motor 10" of FIG. 7C includes 30 permanent magnets 150, the number of magnetic dipoles of the rotor 100 is 15. The stator 200" includes nine first teeth 220 arranged in the circumferential direction of the first stator core 210, and eighteen third teeth 280 are arranged on the ends 221 of the first teeth 220, respectively. In the three-phase brushless motor 10", since the coils 230 are respectively wound around the nine first teeth 220, the number of magnetic dipoles of the first teeth 220 of the stator 200" is 3. In addition, since the third teeth 280 of the stator 200" interact with the magnetic dipoles arranged in the permanent magnets 150 of the rotor 100, the number of dipoles of the third teeth 280 of the stator 200" is 18. Thus, it may be ascertained that the brushless motor 10" of FIG. 7C has the vernier structure that satisfies the conditions of Equation (2).

The brushless motor 10" to which the vernier structure has been applied may obtain an auto reduction effect as shown in Equation (3), compared with general brushless motors:

$$G_r = (P_s - N_s)/P_s \qquad (3)$$

In Equation (3), $G_r$ indicates an auto reduction ratio. In the brushless motor 10" of FIG. 7B, an auto reduction effect corresponding to 1/5 of the auto reduction effect of general brushless motors may be generated. Accordingly, the brushless motor 10" to which the vernier structure has been applied may increase a torque density by five times, compared with general brushless motors having the same polarity as the brushless motor 10".

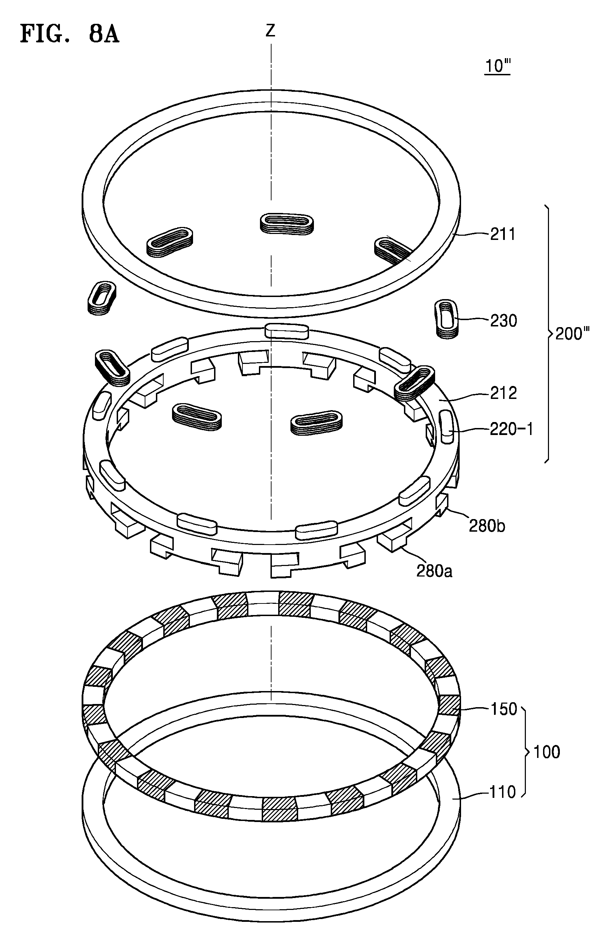

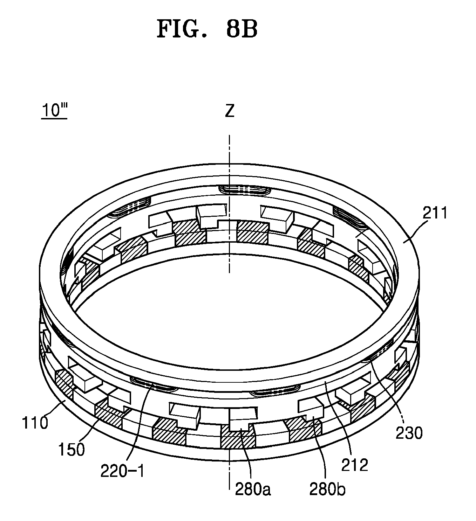

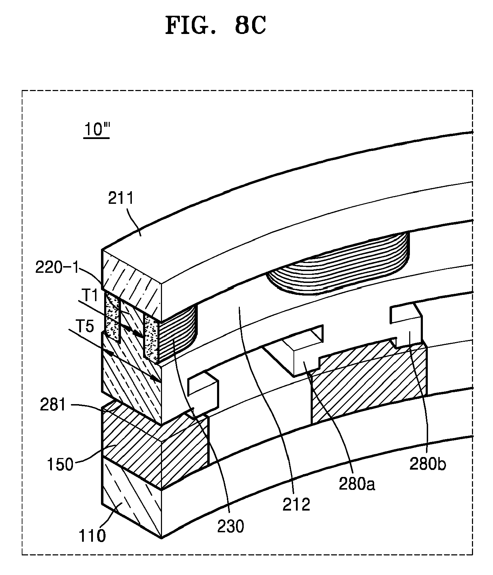

FIG. 8A is an exploded perspective view of a brushless motor, 10'", obtainable by modifying the stator 200 of the brushless motor 10 of FIG. 1, according to another embodiment of the present disclosure. FIG. 8B is an assembled perspective view of the brushless motor of FIG. 8A. FIG. 8C is a partial perspective view of the brushless motor of FIG. 8A.

Referring to FIGS. 8A and 8B, the brushless motor 10'" includes a stator 200'" and a rotor 100 that rotates with respect to the stator 200'". The stator 200'" includes a first flat ring-shaped stator core 211 having a hollow interior, first teeth 220 each extending in the direction of the rotational axis Z and arranged in a circumferential direction of the first stator core 211, a second stator core 212 having a hollow shape and connected to one end of each of the first teeth 220-1, and third teeth 280 each extending in the direction of the rotational axis Z and arranged in a circumferential direction of the second stator core 212. Coils 230 may be respectively wound around the first teeth 220-1. Although it is illustrated that the first teeth 220-1 and the third teeth 280 are connected via the second stator core 212, the first teeth 220-1 and the third teeth 280 may be directly connected to each other, rather than via the second stator core 212.

Referring to FIG. 8C, a width T1 of each of the first teeth 220-1 in the radial direction of the stator 200'" may be set to be less than a width T5 of each of the third teeth 280 in the radial direction of the stator 200'". Therefore, the brushless motor 10 of FIGS. 8A-8C may be disposed within a restricted radius of the rotational axis Z, and the area of a surface on which a magnetic force is exerted between the stator 200'" and the rotor 100 and the number of windings of each of the coils 230 may be maintained or increased, and thus a torque of the brushless motor 10'" may be maintained or increased. Details of the relationship between the width T5, and the area of a surface on which a magnetic force is exerted between the stator 200'" and the rotor 100 and the number of windings of each of the coils 230 may be the same as those described above with reference to FIG. 6C, and thus repeated descriptions thereof are omitted herein.

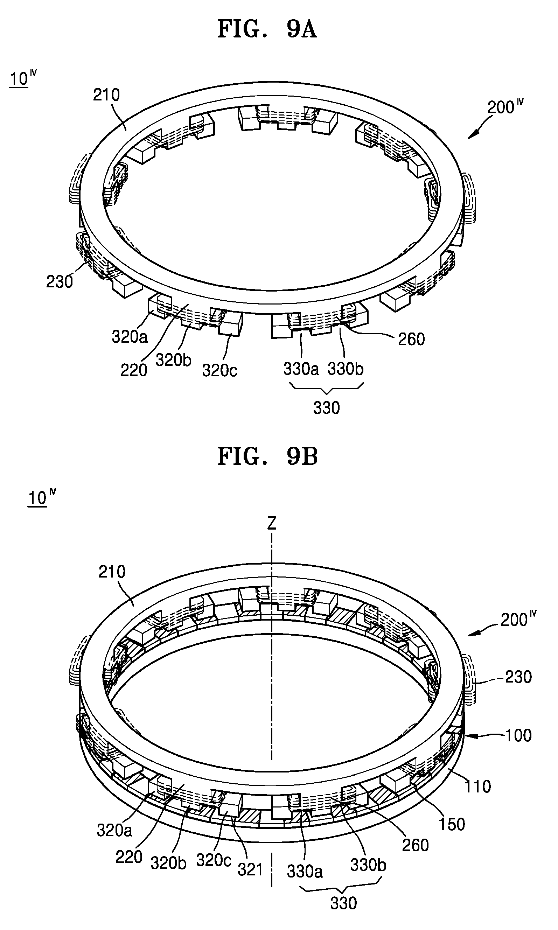

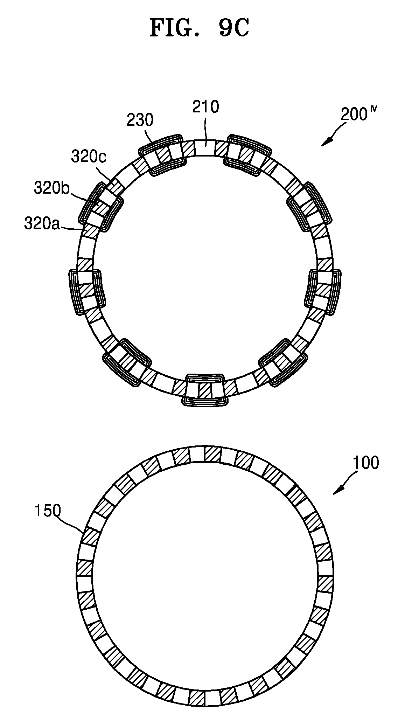

FIGS. 9A and 9B are perspective views of a stator 200^IV and a brushless motor 10^IV, respectively, according to another embodiment of the present invention. FIG. 9C is a plan view of a rotor 100 and the stator 200^IV of the brushless motor 10 of FIG. 9B.

Referring to FIGS. 9A and 9B, the first teeth 220 and third teeth 320 connected to the first teeth 220 are arranged on the first stator core 210. (In this discussion, reference to the legend 320 refers to any tooth 320a, 320b or 320c. Each tooth 320a, 320b and 320c is an example of a tooth 320.) A connection member 260 extending in the circumferential direction of the first stator core 210 is disposed on one end 221 of each of the first teeth 220 arranged on the first stator core 210, and third teeth 320a, 320b, and 320c are respectively arranged on both ends of the connection member 260 and a space in between the both ends at equal intervals.

Third slots 330a and 330b are formed between third teeth 320a, 320b, and 320c, and ends 321 of the third teeth 320a, 320b, and 320c respectively face the permanent magnets 150 of the rotor 100 in the direction of the rotational axis Z.

Referring to FIG. 9C, 48 permanent magnets 150 are arranged on the rotor 100 of the brushless motor 10^IV, the stator 200^IV includes nine first teeth 220 arranged in the circumferential direction of the first stator core 210, and 27 third teeth 320a, 320b, 320c are arranged on the respective ends 221 of the first teeth 220. Accordingly, the number of magnetic dipoles of the rotor 100 is 24, the number of dipoles of the first teeth 220 of the stator 200^IV is 3, and the number of dipoles of the third teeth 320 of the stator 200^IV is 27. Thus, it may be ascertained that the brushless motor 10^IV of FIG. 9B has the vernier structure that satisfies the conditions of Equation (2).

According to Equation (3), it may be ascertained that the brushless motor 10^IV of FIG. 9B generates an auto reduction effect corresponding to 1/8 the auto reduction effect of general brushless motors. The brushless motor 10^IV of FIGS. 9A-9C, to which the vernier structure has been applied, may increase a torque density that is eight times the torque density of general brushless motors having the same polarity of the brushless motor 10^IV of FIGS. 9A-9C.

According to an embodiment of the present disclosure, the number of third teeth 280 or third teeth 320 connected to the first teeth 220 is 2 or 3, but in other embodiments, more third teeth may be connected to each first tooth. As long as the conditions of Equation (2) are satisfied, 3 or more teeth may be connected to any first tooth 220. When 3 or more teeth are connected to one or more first teeth 220, an interval between a plurality of teeth arranged on the first teeth 220 is reduced, and thus a leakage magnetic flux may be reduced. Additionally, valid magnetic flux interlinking with the coils 230 may increase, and thus a torque of the brushless motor 10 may increase.

According to one or more embodiments of the present disclosure, since a rotor and a stator are arranged relative to one another in the direction of a rotational axis, a driving system for structures arranged in the direction of the rotational axis may be realized, and the entire driving system may be reduced or miniaturized.

By applying a vernier structure to a brushless motor, a high torque may be generated at a low-speed rotation.

Even when the brushless motor is disposed within a restricted radius of the rotational axis, a torque of the brushless motor may be maintained or increased.

It should be understood that the exemplary embodiments described therein should be considered in a descriptive sense only and not for purposes of limitation. Descriptions of features or aspects within each embodiment should typically be considered as available for other similar features or aspects in other embodiments.

The use of the terms "a" and "an" and "the" and similar referents in the context of describing the inventive concept (especially in the context of the following claims) are to be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein. Also, the steps of all methods described herein can be performed in any suitable order unless otherwise indicated herein or otherwise clearly contradicted by context. The present disclosure is not limited to the described order of the steps. The use of any and all examples, or exemplary language (e.g., "such as") provided herein, is intended merely to better illuminate the invention and does not pose a limitation on the scope of the inventive concept unless otherwise claimed. Numerous modifications and adaptations will be readily apparent to one of ordinary skill in the art without departing from the scope of the inventive concept.

While the invention has been shown and described with reference to certain exemplary embodiments thereof, it will be understood by those skilled in the art that various changes in form and detail may be made therein without departing from the scope of the invention, as defined by the appended claims.

**Claims**

1. A brushless motor comprising:

   a rotor comprising a plurality of annularly arranged permanent magnets which are N-poles and S-poles that alternate with each other about a rotational axis of the rotor; and
   a stator comprising first teeth annularly arranged and facing the plurality of permanent magnets in a direction of the rotational axis, and a plurality of coils corresponding to the first teeth,
   wherein a relationship between a number $Z_2$ of magnetic dipoles of the plurality of permanent magnets, a number $Z_1$ of first teeth, and a number P of magnetic dipoles of the stator is $Z_2 = Z_1 \pm P$.

2. The brushless motor of claim 1, wherein the rotor further comprises a rotor core having a hollow interior and supports the plurality of permanent magnets, and
the stator further comprises a first stator core having a hollow interior and supports the first teeth.

3. The brushless motor of claim 2, wherein the plurality of coils are wound around the first teeth.

4. The brushless motor of claim 2, wherein:

   the first teeth are arranged separate from each other at equal intervals in a circumferential path about the rotational axis, and a plurality of first slots are formed between the first teeth, and
   the plurality of coils are wound around the first stator core such that the plurality of coils correspond to the plurality of first slots.

5. The brushless motor of claim 3, further comprising second teeth which are respectively connected to portions of the first teeth and arranged to face the plurality of permanent magnets in the direction of the rotational axis,
   wherein a width of each of the second teeth in a radial direction of the stator is greater than a width of each of the first teeth in the radial direction of the stator.

6. The brushless motor of claim 5, further comprising a second stator core that has a hollow interior, interposed between the first teeth and the second teeth, and connects the second teeth to each other.

7. The brushless motor of claim 5 or 6, wherein a width of each of the second teeth in the radial direction of the stator is equal to or greater than a sum of a width of each of the first teeth in the radial direction of the stator and a width of each of the plurality of coils wound around the first teeth.

8. A brushless motor comprising:

   a rotor comprising a plurality of permanent magnets which are N-poles and S-poles that alternate with each other annularly about a rotational axis of the rotor; and
   a stator,
   wherein the stator comprises:

   first teeth annularly arranged and each extending in a direction of the rotational axis;
   a plurality of coils corresponding to the first teeth;
   a plurality of connection members respectively extending from the first teeth; and
   third teeth respectively arranged on the plurality of connection members such that the third teeth face the plurality of permanent magnets in the direction of the rotational axis.

9. The brushless motor of claim 8, wherein, a relationship between a number $P_r$ of magnetic dipoles of the plurality of permanent magnets, a number $N_s$ of dipoles of the third teeth, and a number $P_s$ of dipoles of the first teeth is $P_r = N_s - P_s$.

10. The brushless motor of claim 8 or 9, further comprising a rotor core having a hollow interior and supports the plurality of permanent magnets and a first stator core that has a hollow interior and supports the first teeth.

11. The brushless motor of claim 8, 9 or 10, wherein the plurality of coils are wound around the first teeth.

12. The brushless motor of any of claims 8 to 11, wherein the first teeth are arranged separate from each other at equal intervals in a circumferential path around the rotational axis, and a plurality of first slots are formed between the first teeth.

13. The brushless motor of any of claims 8 to 12, wherein the third teeth are arranged separate from each other at equal intervals in a circumferential path around the rotational axis, and a plurality of second slots are formed between the third teeth.

14. The brushless motor of any of claims 8 to 13, wherein a width of each of the third teeth in a radial direction of the stator, from the rotational axis, is greater than a width of each of the first teeth in the radial direction of the stator.

15. The brushless motor of claim 14, wherein a width of each of the third teeth in the radial direction of the stator is equal to or greater than a sum of a width of each of the first teeth in the radial direction of the stator and a width of each of the plurality of coils wound around the first teeth.

# FIG. 1

# FIG. 2

# FIG. 3

# FIG. 4A

# FIG. 4B

10

200

100

220  210  230

200

400

100

150  110  221

# FIG. 4C

FIG. 5

FIG. 6A

10'

211

230

200'

212

220-1

222

150

100

110

# FIG. 6B

# FIG. 6C

## FIG. 7A

## FIG. 7B

# FIG. 7C

## FIG. 8A

# FIG. 8B

FIG. 8C

# FIG. 9A

10ᴵⱽ

210

200ᴵⱽ

230

320a
220
320b
320c
330a 330b
260
330

# FIG. 9B

10ᴵⱽ

Z

210

200ᴵⱽ

230

100

110

150

320a
220 320b 320c 321
330a
260
330b
330

# FIG. 9C

| | Europäisches Patentamt European Patent Office Office européen des brevets | **EUROPEAN SEARCH REPORT** | Application Number EP 15 17 1470 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2011/133592 A1 (HINO HARUYOSHI [JP] ET AL) 9 June 2011 (2011-06-09) * abstract; figures 4,10, * ----- | 1-15 | INV. H02K21/24 H02K1/14 |
| A | JP 2009 038897 A (DAIKIN IND LTD) 19 February 2009 (2009-02-19) * abstract; figures 5,7,8,10 * ----- | 1-15 | |
| A | EP 1 955 939 A2 (YAMAHA MOTOR CO LTD [JP]) 13 August 2008 (2008-08-13) * abstract; figures 7-9 * ----- | 1-15 | |
| | | | TECHNICAL FIELDS SEARCHED (IPC) H02K |

The present search report has been drawn up for all claims

| Place of search | Date of completion of the search | Examiner |
|---|---|---|
| The Hague | 27 October 2015 | Espinós Iglesias, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 15 17 1470

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2015

| Patent document cited in search report | Publication date | Patent family member(s) | Publication date |
|---|---|---|---|
| US 2011133592 A1 | 09-06-2011 | CN 101783564 A | 21-07-2010 |
| | | CN 101789665 A | 28-07-2010 |
| | | CN 101789666 A | 28-07-2010 |
| | | CN 101807836 A | 18-08-2010 |
| | | CN 102412682 A | 11-04-2012 |
| | | EP 1670124 A2 | 14-06-2006 |
| | | EP 1768249 A2 | 28-03-2007 |
| | | EP 1777799 A1 | 25-04-2007 |
| | | EP 2256909 A2 | 01-12-2010 |
| | | JP 2006191782 A | 20-07-2006 |
| | | KR 20060065479 A | 14-06-2006 |
| | | KR 20110031936 A | 29-03-2011 |
| | | TW I306324 B | 11-02-2009 |
| | | US 2006152104 A1 | 13-07-2006 |
| | | US 2009224625 A1 | 10-09-2009 |
| | | US 2011133592 A1 | 09-06-2011 |
| JP 2009038897 A | 19-02-2009 | NONE | |
| EP 1955939 A2 | 13-08-2008 | BR PI0800151 A | 23-09-2008 |
| | | CN 101242123 A | 13-08-2008 |
| | | EP 1955939 A2 | 13-08-2008 |
| | | JP 2008193841 A | 21-08-2008 |
| | | TW 200906652 A | 16-02-2009 |
| | | US 2008185205 A1 | 07-08-2008 |

EPO FORM P0459

For more details about this annex : see Official Journal of the European Patent Office, No. 12/82